# EUROPÄISCHE PATENTSCHRIFT

(11) **EP 1 773 611 B1**
(45) Veröffentlichungstag und Bekanntmachung des Hinweises auf die Patenterteilung: **13.01.2010**
(21) Anmeldenummer: 05775116.6
(22) Anmeldetag: 27.07.2005
(51) Int. Cl.: B60J 7/22, B60J 7/043

(54) **WINDABWEISER FÜR EIN FAHRZEUGDACH**
WIND DEFLECTOR FOR A VEHICLE ROOF
DEFLECTEUR DE VENT POUR TOIT DE VEHICULE

(30) Priorität: 02.08.2004 DE 102004037646
(43) Veröffentlichungstag der Anmeldung: 18.04.2007
(73) Patentinhaber: Webasto AG, 82131 Stockdorf (DE)
(72) Erfinder: POCCHIOLA, Viter, Sergio, I-10070 Mezzenile (IT)
(86) Internationale Anmeldenummer: PCT/DE2005/001331
(87) Internationale Veröffentlichungsnummer: WO 2006/012861

(56) Entgegenhaltungen:
- EP-A- 0 490 213
- BE-A- 572 858
- DE-A1- 4 239 428
- DE-A1- 19 930 049
- DE-B3- 10 336 361
- US-A1- 2003 038 512

## Beschreibung

Die vorliegende Erfindung betrifft einen Windabweiser für ein Fachzeugdach mit einer mittels eines verstellbaren Deckels verschließbaren Dachöffnung, umfassend einen entlang des vorderen Randes der Dachöffnung angeordneten Windabweiser, welcher zwischen einer in die Dachaußenkontur zurückgezogenen Außerbetriebsstellung und einer nach oben ausgestellten Betriebsstellung verstellbar ist, wobei die vom Fahrtwind angeströmte Wirkfläche des Windabweisers mit einem luftdurchlässigen Netz versehen ist.

Windabweiser der genannten Art haben die Aufgabe, die den Windabweiser anströmende Luft zumindest teilweise nach oben abzulenken, womit zum einen eine direkte Anströmung der Fahrzeuginsassen verhindert und zum anderen eine Verminderung der Geräuschentwicklung durch die anströmende Luft bewirkt wird.

Durch die DE 42 39 428 A1 ist bereits ein Windabweiser bekannt, der von einem in einem Rahmen aufgespannten elastischen Netz gebildet ist. Durch die Verwendung des elastischen Netzes soll der Unterdruck im Fahrzeuginnenraum dosiert aufgefüllt und störende Windgeräusche und Zugerscheinungen auf ein Minimum reduziert werden. Es hat sich jedoch gezeigt, dass die erhoffte Wirkung bei einem über die ganze Breite des Windabweisers gleich ausgebildeten Netz unzureichend ist, da die Anströmbedingungen und gegebenenfalls die hinter dem Netz erwünschten Abströmbedingungen über die Netzbreite unterschiedlich sind, eine Anpassung an diese unterschiedlichen Bedingungen jedoch nicht gegeben ist.

Durch die EP 0 490 213 A1 ist ein Windabweiser bekannt, welcher in Teilbereichen seiner Fläche mit einem luftdurchlässigen Netz versehen ist. Diesbezügliche Ausführungsbeispiele weisen einen an sich durch eine starre Fläche gebildeten Windabweiser auf, welcher mit mehreren über seine Breite verteilt angeordneten Öffnungen versehen ist, die ihrerseits jeweils von einem Netz überdeckt sind. Die über die Breite des Windabweisers verteilten Öffnungen und die zugeordneten Netze sind jeweils gleich, so dass auch in diesem Fall eine Anpassung an über die Breite des Windabweisers unterschiedliche Anströmungs- und Abströmungsbedingungen nicht gegeben ist.

Es ist die Aufgabe der Erfindung, einen Windabweiser der im Oberbegriff des Anspruches 1 genannten Art zu schaffen, welcher in konstruktiv einfacher und damit kostengünstiger Weise eine Anpassung an in Breitenrichtung des Windabweisers unterschiedliche Anströmungs- und Abströmungsbedingungen ermöglicht.

Diese Aufgabe ist erfindungsgemäß durch einen Windabweiser der im Anspruch 1 beschriebenen Art gelöst.

Erfindungsgemäß ist vorgesehen, dass die Wirkfläche als Netz oder dergleichen gebildet ist, welches aus mehreren in Breitenrichtung nebeneinander angeordneten Abschnitten unterschiedlicher Gewebedichte besteht.

Es sei an dieser Stelle bemerkt, dass unter dem Begriff "Netz" alle denkbaren netzartigen Strukturen zu verstehen sind, d.h. beispielsweise geknüpfte Netze, Gewebe, gelochte Folien oder dergleichen.

Die erfindungsgemäße Ausgestaltung des Windabweisers ermöglicht es, diesen an in Breitenrichtung unterschiedliche Anströmbedingungen bzw. erwünschte Abströmbedingungen, die von Fahrzeugtyp zu Fahrzeugtyp unterschiedlich sein können, optimal anzupassen.

In Versuchen hat sich gezeigt, dass eine zufriedenstellende Wirkung schon mit lediglich zwei unterschiedlichen Gewebedichten erreicht werden kann, wobei sich jeweils Abschnitte mit einer ersten Gewebedichte mit Abschnitten mit einer zweiten Gewebedichte abwechseln; dabei kann durch die Wahl der Anzahl und Breite der Abschnitte eine Vielzahl von Ausgestaltungsvarianten realisiert werden. Bei einer besonders einfachen Variante ist ein mittlerer Abschnitt mit einer ersten Gewebedichte vorgesehen, an den sich zu beiden Seiten jeweils ein Abschnitt mit einer zweiten Gewebedichte anschließen.

In einer bevorzugten Ausgestaltung der Erfindung ist vorgesehen, dass sich an einen mittleren Abschnitt mit einer ersten Gewebedichte jeweils zu beiden Seiten mehrere Abschnitte mit abwechselnd einer zweiten Gewebedichte und der im mittleren Abschnitt verwendeten ersten Gewebedichte anschließen; d.h., dass sich an den mittleren Abschnitt mit der ersten Gewebedichte jeweils ein Abschnitt mit einer zweiten Gewebedichte, an diesen wiederum ein Abschnitt mit der ersten Gewebedichte usw. anschließen; dabei ergibt sich eine zu einer vertikalen Längsmittelebene des Fahrzeuges symmetrische Anordnung der Abschnitte. Die Anzahl und die jeweilige Breite der Abschnitte sind variabel und können - beispielsweise durch Versuche - an die jeweiligen Erfordernisse angepasst und damit optimiert werden.

Bei einer ersten Ausführungsvariante ist die erste Gewebedichte größer als die zweite Gewebedichte, d.h. an einen mittleren Abschnitt mit größerer Gewebedichte schließen sich seitlich Abschnitte mit einer geringeren Gewebedichte, an diese wieder je ein Abschnitt mit größerer Gewebedichte usw. an.

Gemäß einer zweiten Ausführungsvariante ist die erste Gewebedichte geringer als die zweite Gewebedichte, d.h. die Folge der Abschnitte ist umgekehrt wie im Falle der ersten Ausführungsvariante.

Wiederum durch Versuche hat sich gezeigt, dass es genügt, wenn sich an den mittleren Abschnitt jeweils zu beiden Seiten drei Abschnitte anschließen; auf diese Weise erhält man eine hinsichtlich der erwünschten Wirkung zufriedenstellende und hinsichtlich des Fertigungsaufwandes akzeptable Anordnung.

Zufriedenstellende Ergebnisse wurden mit einem Windabweiser erzielt, bei welchem die Abschnitte mit größerer Gewebedichte weitgehend luftdicht und die Abschnitte mit geringerer Gewebedichte als Netze mit verhältnismäßig großer Maschenweite ausgebildet waren. Die auf die Abschnitte mit größerer Gewebedichte auftreffende Luftströmung tritt nur zu einem geringen Teil durch das Gewebe hindurch, während ein größerer Anteil nach oben und zur Seite abgelenkt wird. Die auf die Abschnitte mit geringerer Gewebedichte auftreffende Luft tritt hingegen zum größeren Teil unter Bildung von Turbulenzen durch das Gewebe hindurch, während nur ein geringer bzw. je nach Maschenweite verschwindend kleiner Teil abgelenkt wird. Auf diese Weise wird eine sanfte Verwirbelung erzielt, die sich weder als lästiger Zug für die Fahrzeuginsassen auswirkt noch eine störende Geräuschentwicklung verursacht.

Gemäß einer herstellungstechnisch bevorzugten Ausgestaltung der Erfindung ist vorgesehen, dass das Netz ein einteiliges Gewebe mit Abschnitten unterschiedlicher Gewebedichte ist. Die einzelnen Abschnitte schließen nahtlos aneinander an, wobei die jeweilige Breite der Abschnitte und die in diesen gewählte Gewebedichte schon bei der Herstellung des Netzes bestimmt und durch eine entsprechende Webetechnik verwirklicht wird.

Das Netz ist vorzugsweise in eine im Bereich des vorderen Randes der Dachöffnung verstellbar angeordnete Rahmenstruktur eingespannt, welche über Betätigungsmittel zwischen der Betriebsstellung und der Außerbetriebsstellung verstellt werden kann, wie an sich bekannt ist.

Mehrere Ausführungsbeispiele der Erfindung sind in der Zeichnung dargestellt und im folgenden näher beschrieben. Es zeigen:
- Fig. 1: in einer perspektivischen Ansicht ein Fahrzeugdach mit einer ge- öffneten Dachöffnung und einem ausgestellten Windabweiser;
- Fig. 2: in einer perspektivischen, vergrößerten Ansicht einen Windab- weiser etwa gemäß der Fig. 1;
- Fig. 3 bis 5: schematisch unterschiedliche Netzvarianten für einen Windab- weiser gemäß den Fig. 1 und 2.

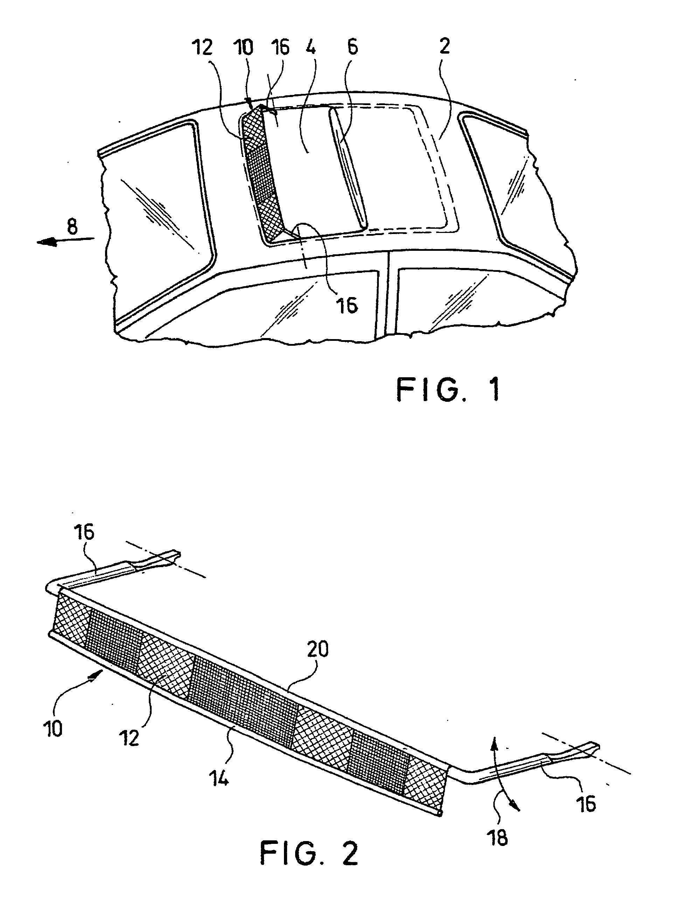

Fig. 1 zeigt in einer perspektivischen Ansicht schräg von oben ein Fahrzeugdach 2 mit einer Dachöffnung 4, die mittels eines verschiebbaren Deckels 6 wahlweise verschlossen oder freigelegt werden kann. Fig. 1 zeigt den Deckel 6 in einer Stellung, bei der die Dachöffnung 4 geöffnet ist.

An der bezüglich der Fahrtrichtung 8 vorderen Kante der Dachöffnung 4 ist ein Windabweiser 10 angeordnet, welcher durch nicht dargestellte Stellmittel zwischen einer in die Dachaußenkontur zurückgezogenen Außerbetriebsstellung bei geschlossener Dachöffnung 4 und der in Fig. 1 dargestellten, nach oben ausgestellten Betriebsstellung bei offener Dachöffnung 4 verstellt werden kann. Die eigentliche windabweisende Fläche des Windabweisers 10 umfasst ein Netz 12, welches aus mehreren Abschnitten unterschiedlicher Gewebedichte besteht.

Wie insbesondere Fig. 2 erkennen lässt, ist das Netz 12 zwischen einer unteren, am Fahrzeugdach fest angeordneten Rahmenstrebe 14 und einer oberen, über Lenker 16 in Richtung des Pfeiles 18 verschwenkbaren Rahmenstrebe 20 eingespannt. Für die Außerbetriebsstellung wird die obere Rahmenstrebe 20 nach unten in eine in die Dachaußenkontur zurückgezogene Lage verschwenkt, wobei das Netz 12 eine Falte bildet. Für die Betriebsstellung wird die obere Rahmenstrebe 20 nach oben verschwenkt, wodurch das Netz 12 in eine vom Fahrtwind angeströmte Stellung verbracht und gespannt wird.

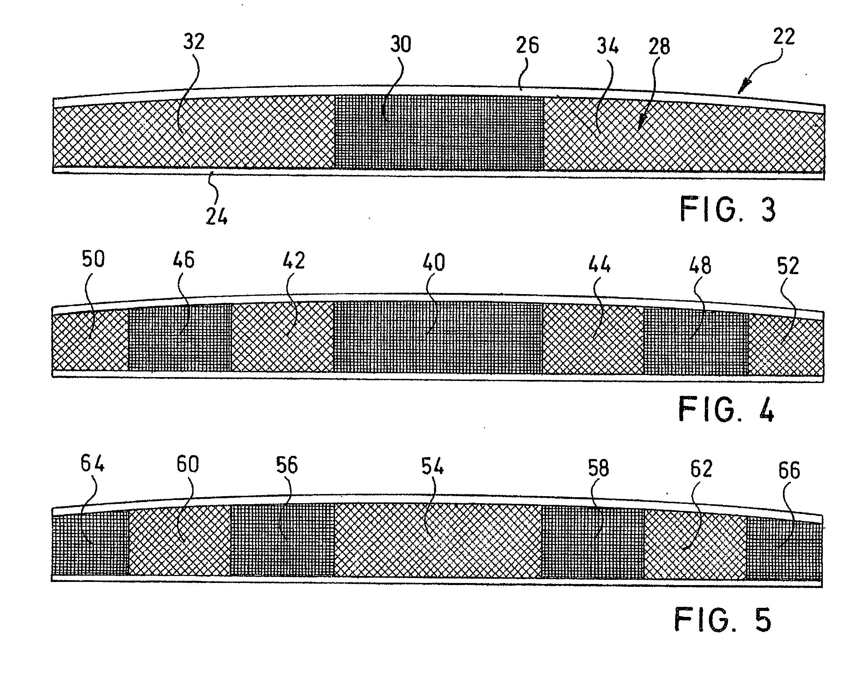

Fig. 3 zeigt einen Windabweiser 22 mit einem zwischen einer unteren Rahmenstrebe 24 und einer oberen Rahmenstrebe 26 gespannten Netz 28. Das Netz 28 hat einen mittleren Abschnitt 30 mit einer großen Gewebedichte, an den sich zu beiden Seiten jeweils ein Abschnitt 32 bzw. 34 mit einer geringen Gewebedichte anschließt. Wie bereits weiter vorne ausgeführt wurde, ist die Gewebedichte des mittleren Abschnittes 30 so groß, dass nur ein geringer Teil der anströmenden Luft hindurchtritt, während ein größerer Teil der Luft nach oben oder auch zur Seite abgelenkt wird.

Fig. 4 zeigt eine Anordnung ähnlich der Fig. 3 mit einem mittleren Abschnitt 40 hoher Gewebedichte; an den mittleren Abschnitt 40 schließen sich zu beiden Seiten jeweils ein Abschnitt 42 bzw. 44 geringer Gewebedichte, ein weiterer Abschnitt 46 bzw. 48 hoher Gewebedichte sowie ein weiterer Abschnitt 50 bzw. 52 geringer Gewebedichte an.

Fig. 5 zeigt eine Anordnung mit einem mittleren Abschnitt 54 geringer Gewebedichte, an den sich seitlich jeweils ein Abschnitt 56 bzw. 58 hoher Gewebedichte, ein weiterer Abschnitt 60 bzw. 62 geringer Gewebedichte sowie ein Abschnitt 64 bzw. 66 hoher Gewebedichte anschließen. Die Anordnung gemäß der Fig. 5 stellt damit im wesentlichen eine Umkehrung der Anordnung gemäß der Fig. 4 dar.

Wie ebenfalls bereits weiter vorne ausgeführt wurde, sind die in den Fig. 3 bis 5 dargestellten Netze vorzugsweise mittels einer geeigneten Webetechnik bzw. Fertigungstechnik als einteilige Gewebe ohne Nähte oder andere Verbindungsstellen zwischen den einzelnen Abschnitten hergestellt.

### Bezugszeichenliste

- 2: Fahrzeugdach
- 4: Dachöffnung
- 6: Deckel
- 8: Fahrtrichtung
- 10: Windabweiser
- 12: Netz
- 14: untere Rahmenstrebe
- 16: Lenker
- 18: Pfeil
- 20: obere Rahmenstrebe
- 22: Windabweiser
- 24: untere Rahmenstrebe
- 26: obere Rahmenstrebe
- 28: Netz
- 30: mittlerer Abschnitt
- 32: seitlicher Abschnitt
- 34: seitlicher Abschnitt
- 40: mittlerer Abschnitt
- 42: erster seitlicher Abschnitt
- 44: erster seitlicher Abschnitt
- 46: zweiter seitlicher Abschnitt
- 48: zweiter seitlicher Abschnitt
- 50: dritter seitlicher Abschnitt
- 52: dritter seitlicher Abschnitt
- 54: mittlerer Abschnitt
- 56: erster seitlicher Abschnitt
- 58: erster seitlicher Abschnitt
- 60: zweiter seitlicher Abschnitt
- 62: zweiter seitlicher Abschnitt
- 64: dritter seitlicher Abschnitt
- 66: dritter seitlicher Abschnitt

## Patentansprüche

1. Windabweiser für ein Fahrzeugdach mit einer mittels eines verstellbaren Deckels verschließbaren Dachöffnung, umfassend ein entlang des vorderen Randes der Dachöffnung angeordnetes Windabweiserelement, welches zwischen einer in die Dachaußenkontur zurückgezogenen Außerbetriebsstellung und einer nach oben ausgestellten Betriebsstellung verstellbar ist, wobei die vom Fahrtwind angeströmte Wirkfläche des Windabweisers mit einem luftdurchlässigen Netz versehen ist,
**dadurch gekennzeichnet, dass** das die Wirkfläche bildende Netz (12) aus mehreren nebeneinander angeordneten Abschnitten unterschiedlicher Gewebedichte besteht.

2. Windabweiser nach Anspruch 1, **dadurch gekennzeichnet, dass** sich jeweils Abschnitte (40, 46, 48) mit einer ersten Gewebedichte und Abschnitte (42, 44, 50, 52) mit einer zweiten Gewebedichte abwechseln.

3. Windabweiser nach Anspruch 2, **dadurch gekennzeichnet, dass** sich an einen mittleren Abschnitt (40) mit einer ersten Gewebedichte jeweils zu beiden Seiten Abschnitte (42, 46, 50; 44, 48, 52) mit abwechselnd einer zweiten Gewebedichte und einer dem ersten Abschnitt entsprechenden Gewebedichte anschließen.

4. Windabweiser nach Anspruch 3, **dadurch gekennzeichnet, dass** die Anordnung der Abschnitte (40, 42, 44, 46, 48, 50, 52) symmetrisch zu einer vertikalen Längsmittelebene des Fahrzeuges ist.

5. Windabweiser nach Anspruch 3 oder 4, **dadurch gekennzeichnet, dass** die erste Gewebedichte (Abschnitte 40, 46, 48) größer als die zweite Gewebedichte (Abschnitte 42, 44, 50, 52) ist.

6. Windabweiser nach Anspruch 3 oder 4, **dadurch gekennzeichnet, dass** die erste Gewebedichte (Abschnitte 54, 60, 62) geringer als die zweite Gewebedichte (Abschnitte 56, 58, 64, 66) ist.

7. Windabweiser nach einem der Ansprüche 3 bis 6, **dadurch gekennzeichnet, dass** sich an den mittleren Abschnitt (40) jeweils zu beiden Seiten drei Abschnitte (42, 46, 50; 44, 48, 52) anschließen.

8. Windabweiser nach einem der Ansprüche 2 bis 7, **dadurch gekennzeichnet, dass** die Abschnitte (40, 46, 48) mit größerer Gewebedichte weitgehend luftdicht ausgebildet sind.

9. Windabweiser nach einem der Ansprüche 2 bis 8, **dadurch gekennzeichnet, dass** die Abschnitte (42, 44, 50, 52) mit geringer Gewebedichte als Netze mit großer Maschenweite ausgebildet sind.

10. Windabweiser nach einem der Ansprüche 1 bis 9, **dadurch gekennzeichnet, dass** das Netz (12) ein einteiliges Gewebe mit Abschnitten unterschiedlicher Gewebedichte ist.

11. Windabweiser nach einem der Ansprüche 1 bis 10, **dadurch gekennzeichnet, dass** das Netz (12) in eine Rahmenstruktur (Rahmenstreben 14, 20) oder dergleichen eingespannt ist.

## Claims

1. Wind deflector for a vehicle roof with a roof opening which is closable by means of a displaceable cover, the wind deflector comprising a wind deflector element which is arranged along the front edge of the roof opening and is displaceable between a non-operational position retracted into the outer contour of the roof and an upwardly deployed operational position, wherein the effective surface of the wind deflector, against which the airstream flows, is provided with an air-permeable netting, **characterized in that** the netting (12) forming the effective surface comprises a plurality of adjacently arranged sections of different weave density.

2. Wind deflector according to Claim 1, **characterized in that** sections (40, 46, 48) having a first weave density and sections (42, 44, 50, 52) having a second weave density, respectively, alternate.

3. Wind deflector according to Claim 2, **characterized in that** a central section (40) having a first weave density is adjoined in each case on both sides by sections (42, 46, 50; 44, 48, 52) having, in an alternating manner, a second weave density and a weave density corresponding to the first section.

4. Wind deflector according to Claim 3, **characterized in that** the arrangement of the sections (40, 42, 44, 46, 48, 50, 52) is symmetrical with respect to a vertical longitudinal centre plane of the vehicle.

5. Wind deflector according to Claim 3 or 4, **characterized in that** the first weave density (sections 40, 46, 48) is greater than the second weave density (sections 42, 44, 50, 52).

6. Wind deflector according to Claim 3 or 4, **characterized in that** the first weave density (sections 54, 60, 62) is lower than the second weave density (sections 56, 58, 64, 66).

7. Wind deflector according to one of Claims 3 to 6, **characterized in that** the central section (40) is adjoined in each case on both sides by three sections (42, 46, 50; 44, 48, 52).

8. Wind deflector according to one of Claims 2 to 7, **characterized in that** the sections (40, 46, 48) having a greater weave density are of substantially airtight design.

9. Wind deflector according to one of Claims 2 to 8, **characterized in that** the sections (42, 44, 50, 52) having a lower weave density are designed as nettings having a large mesh width.

10. Wind deflector according to one of Claims 1 to 9, **characterized in that** the netting (12) is a single-part woven fabric having sections of differing weave density.

11. Wind deflector according to one of Claims 1 to 10, **characterized in that** the netting (12) is clamped into a frame structure (frame struts 14, 20) or the like.

## Revendications

1. Déflecteur de vent pour le toit d'un véhicule automobile qui présente une ouverture de toit qui peut être fermée par un couvercle mobile, et comprenant un élément déflecteur de vent qui est disposé sur le bord avant de l'ouverture de toit et qui peut être déplacé entre une position de non fonctionnement rétractée dans le contour extérieur du toit et une position de fonctionnement sortie vers le haut, la surface active du déflecteur de vent balayée par le vent de déplacement étant dotée d'un treillis perméable à l'air,
**caractérisé en ce que**
le treillis (12) qui forme la surface active est constitué de plusieurs parties en tissus de différentes densités disposées les unes à côté des autres.

2. Déflecteur de vent selon la revendication 1, **caractérisé en ce que** des parties (40, 46, 48) en tissu d'une première densité alternent avec des parties (42, 44, 50, 52) en tissu d'une deuxième densité.

3. Déflecteur de vent selon la revendication 2, **caractérisé en ce que** des parties (42, 46, 50; 44, 48, 52) qui présentent en alternance un tissu d'une deuxième densité et un tissu d'une première densité se raccordent à une partie centrale (40) dont la densité du tissu correspond à celle du tissu de la première partie.

4. Déflecteur de vent selon la revendication 3, **caractérisé en ce que** l'agencement des parties (40, 42, 44, 46, 48, 50, 52) est symétrique par rapport au plan longitudinal central vertical du véhicule.

5. Déflecteur de vent selon les revendications 3 ou 4, **caractérisé en ce que** la première densité de tissu (parties 40, 46, 48) est supérieure à la deuxième densité de tissu (parties 42, 44, 50, 52).

6. Déflecteur de vent selon les revendications 3 ou 4, **caractérisé en ce que** la première densité de tissu (parties 54, 60, 62) est inférieure à la deuxième densité de tissu (parties 56, 58, 64, 66).

7. Déflecteur de vent selon l'une des revendications 3 à 6, **caractérisé en ce que** trois parties (42, 46, 50; 44, 48, 52) se raccordent aux deux côtés respectifs de la partie centrale (40).

8. Déflecteur de vent selon l'une des revendications 2 à 7, **caractérisé en ce que** les parties (40, 46, 48) à plus haute densité de tissu sont largement étanches à l'air.

9. Déflecteur de vent selon l'une des revendications 2 à 8, **caractérisé en ce que** les parties (42, 44, 50, 52) à plus basse densité de tissu sont configurées comme treillis à grandes mailles.

10. Déflecteur de vent selon l'une des revendications 1 à 9, **caractérisé en ce que** le treillis (12) est un tissu d'une seule pièce qui présente des parties de densités différentes.

11. Déflecteur de vent selon l'une des revendications 1 à 10, **caractérisé en ce que** le treillis (12) est tendu dans une structure d'encadrement (entretoises d'encadrement 14, 20) ou similaires.
